Europäisches Patentamt

European Patent Office

Office européen des brevets

(19)

(11) Numéro de publication : **0 252 955 B1**

(12) **FASCICULE DE BREVET EUROPEEN**

(45) Date de publication du fascicule du brevet :
**06.11.91 Bulletin 91/45**

(51) Int. Cl.⁵ : **G05D 16/20**

(21) Numéro de dépôt : **87900663.3**

(22) Date de dépôt : **12.01.87**

(86) Numéro de dépôt international :
**PCT/FR87/00009**

(87) Numéro de publication internationale :
**WO 87/04537 30.07.87 Gazette 87/17**

(54) **REGULATEUR DE PRESSION AVEC CAPTEUR INTEGRE.**

(30) Priorité : **15.01.86 FR 8600667**

(43) Date de publication de la demande :
**20.01.88 Bulletin 88/03**

(45) Mention de la délivrance du brevet :
**06.11.91 Bulletin 91/45**

(84) Etats contractants désignés :
**DE FR GB IT SE**

(56) Documents cités :
**DE-A- 3 347 248**
**FR-A- 2 353 095**
**FR-A- 2 528 192**

(56) Documents cités :
**GB-A- 2 165 372**
**Patent Abstracts of Japan, vol.7, no.59 (M-199)**
**(1204),11 mars 1983;& JP-A-57 205 162 (RICOH**
**K.K) 16 decembre 1982**

(73) Titulaire : **IMAJE S.A.**
**9, rue Gaspard Monge Z.A. de l'Armaillier**
**F-26500 Bourg les Valence (FR)**

(72) Inventeur : **GROSSELIN, Pascal**
**Plateau de l'Essartel Bren**
**F-26260 Saint Donat (FR)**

(74) Mandataire : **Ballot, Paul Denis Jacques**
**Cabinet Ballot-Schmit 7, rue le Sueur**
**F-75116 Paris (FR)**

## Description

L'invention concerne un régulateur de pression d'un fluide avec un capteur intégré.

Dans tous les dispositifs utilisant la pression d'un fluide dans un circuit hydraulique, il est généralement nécessaire de détecter, régler et ajuster constamment et d'une manière très précise ladite pression du fluide.

C'est le cas notamment des imprimantes utilisant un jet continu de gouttes d'encre, celles-ci devant être amenées, sous une pression constante et très précise, au corps de modulation vers un ajutage calibré.

Généralement, les systèmes de commande et d'asservissement, et notamment le capteur, sont séparés du corps de régulation de pression, donc volumineux avec des tuyauteries et des risques de pertes de charges et de fuites.

De plus, l'étanchéité des corps de régulation eux-mêmes est souvent réalisée par un soufflet ou par un joint radial placé sur le piston.

Un appareil de régulation est notamment décrit dans le brevet français 2.528.192. Il s'agit d'un dispositif qui convient plus particulièrement à des fluides gazeux. Certes, il peut aussi servir pour des fluides liquides mais, dans le cas des encres utilisées dans les imprimantes à jet d'encre, un tel dispositif ne conviendrait pas car il fait appel à l'action sur un piston d'une membrane se déplaçant en fonction de la différence entre une pression de consigne et la pression instantanée.

Toutes ces solutions ne sont donc pas compatibles avec leur utilisation dans les imprimantes à jet d'encre. L'encre n'est pas un lubrifiant d'une part, et présente d'autre part l'inconvénient de sécher, ce qui provoque le collage du piston pendant les heures d'inactivité du dispositif.

En général, ces dispositifs existants ne permettent pas d'obtenir un réglage de pression d'utilisation suffisamment fin, surtout dans de basses pressions nominales, pour satisfaire à certaines applications.

C'est notamment le cas des pressions d'encre mises en oeuvre dans les imprimantes à jet d'encre.

L'invention a pour objet de pallier ces inconvénients et répond aux impératifs énoncés ci-dessus.

Elle concerne plus présisément un dispositif de régulation de pression d'un fluide comportant un poussoir appuyant sur un ressort et agissant sur un clapet susceptible de réguler le passage de fluide, le fluide transitant par une canalisation depuis une entrée, vers une sortie réalisée dans un corps, canalisation dans laquelle débouche, de part et d'autre de celle-ci et perpendiculairement à elle, un alésage également réalisé dans le dit corps; caractérisé en ce que l'alésage est relié d'un côté à la combinaison du poussoir, ressort et clapet, le dernier obturant la communication entre l'orifice de l'alésage dans la canalisation et une voie de retour, de de l'autre, à un capteur de pression intégré aussi dans le dit corps, le dit corps étant rendu solidaire d'un second corps dans lequel coulisse librement une noix capable de coopérer avec le dit poussoir commandant le clapet, tandis qu'une membrane souple assure l'étanchéité entre les deux corps et qui constituent alors un ensemble monolithique; la régulation fine de la pression d'utilisation du fluide parcourant le canal étant obtenue grâce à un automatisme externe qui agit sur un moteur pas à pas, suivant une consigne donnée, afin de contraindre plus ou moins le ressort sous l'action d'une vis agissant sur la noix, ce qui a pour effet de créer une fuite par le dit orifice débouchant dans l'alésage, fuite se créant ou s'obturant via l'alésage à la voie de retour, ce qui provoque une variation de la pression.

Bien que solidaire du premier, ce dernier bloc est complètement isolé de la partie fluide.

L'invention sera mieux comprise à l'aide des explications qui vont suivre et de la figure jointe qui représente une coupe en élévation du dispositif, objet de l'invention.

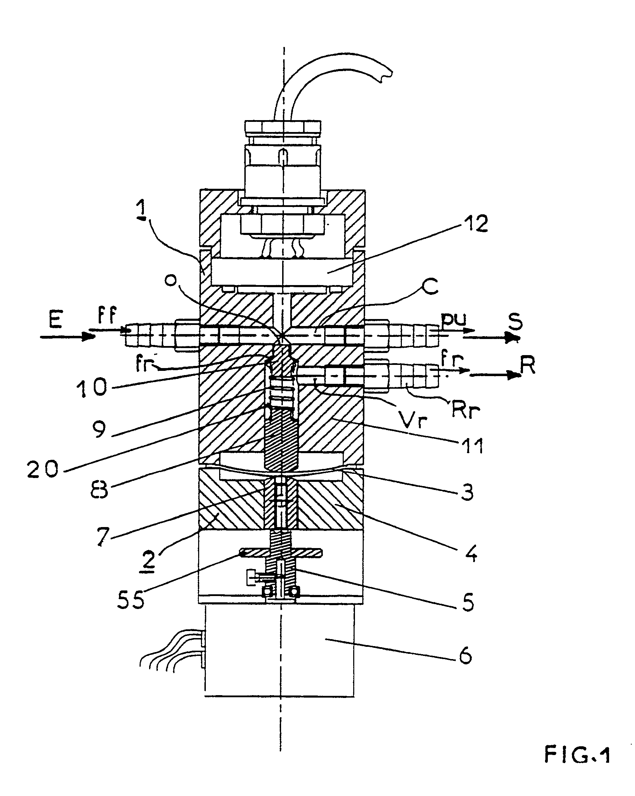

Sur cette figure 1, le dispositif est représenté dans l'état d'obtention de la pression d'utilisation minimale.

Le tronçon (1) que nous appelerons dans la suite du texte "tronçon fluide" est constitué d'un corps (11) comportant une entrée du fluide (E), un canal (C) dans son prolongement ainsi qu'une sortie de fluide (S).

De l'entrée (E) vers la sortie (S), le canal (C) est continuellement parcouru par le fluide (ff) qui est recueilli à la sortie (S) sous une pression d'utilisation (pu) qui doit être parfaitement précise et régulée.

Ce corps (11) est également constitué verticalement et en son centre par un alesage (20) débouchant dans le canal (C) du fluide d'utilisation.

Dans cet alesage circule librement un poussoir (8) appuyant sur un ressort (9) agissant lui-même sur un clapet (10) susceptible d'obturer complètement ou non l'alesage (20).

Ce cylindre (20) est en communication directe avec une voie de retour (Vr) prolongée par un raccord extérieur (Rr).

Au sommet de ce "tronçon fluide" (1) est associée une cellule capteur de pression (12) qui assure la lecture permanente de la pression d'utilisation obtenue (pu).

A la base de ce "tronçon fluide" (1), un "tronçon sec" (2) est constitué d'un corps (4) dans lequel coulisse librement une noix (7) qui coopère avec un poussoir (8) pour agir sur les organes du "tronçon fluide" (1) sous l'action d'une vis (5) mue par un moteur pas à pas (6).

Pour assurer l'étanchéité du dispositif, une membrane souple (3) est intercalée entre le "tronçon fluide" (1) et le "tronçon sec" (2).

C'est à travers cette membrane (3) que la noix (7) appuie sur le poussoir (8). Elle suit ainsi les déformations qui lui sont imposées par les mouvements de montée et de descente de la noix (7) et du poussoir (8).

De part la position de la membrane (3) sur la figure 1, il est bon de rappeler que le dispositif se trouve dans l'état d'obtention de la pression d'utilisation (pu) minimale.

Une redondance manuelle de commande de la vis (5), par la molette (55), est prévue en cas de défaillance du moteur pas à pas (6) lui-même, ou du système programmable d'asservissement.

Selon une caractéristique importante de l'invention, la régulation fine de la pression d'utilisation (pu) du flux de fluide (ff) parcourant le canal (C) est obtenue grâce à un automatisme externe qui agit sur le moteur pas à pas (6) afin de contraindre plus ou moins le ressort (9) sous l'action de la vis (5), ce qui a pour effet de créer une fuite (fr) par l'orifice (O) au sommet du cylindre (20) qui provoque simultanément une variation de la pression (pu). Le fluide issu de la fuite (fr) est évacué par le retour (R).

Le fonctionnement du dispositif, conforme à l'invention, est décrit ci-dessous.

En fonction d'une consigne donnée, un automatisme externe (non représenté) agit sur le moteur pas à pas (6), ce qui a pour but de contraindre plus ou moins le ressort (9) par l'intermédiaire de la noix (7) agissant sur le poussoir (8) à travers une membrane souple (3) qui assure l'étanchéité entre les deux tronçons.

Ce ressort (9) coopérant avec le clapet (10) oppose à la pression (pu) du canal (C) une contre-pression égale ou inférieure à cette dernière, ce qui a pour effet d'obturer plus ou moins l'orifice (O) et de créer ainsi une fuite (fr) dont la conséquence est de faire varier d'une manière très fine et précise la pression d'utilisation (pu) qui traverse le canal (C).

Le fluide issu de la fuite est évacué par le retour (R).

La pression d'utilisation (pu) est lue en permanence par la cellule (12) qui coopère avec le moteur pas à pas (6) pour arrêter son action dès que la pression (pu) souhaitée est atteinte.

Dès qu'une variation de pression d'utilisation (pu) est enregistrée par la cellule (1), le moteur pas à pas asservi (6) agit sur la vis (5) pour corriger la variation (pu) suivant le processus décrit précédemment.

Une autre caractéristique importante de l'invention réside dans le fait que la présence du ressort (9) placé sous le clapet évite le phénomène de pompage en absorbant les très faibles variations de pression.

A titre d'exemple, la précision de régulation obtenue par le dispositif, objet de l'invention, pour une gamme de pression d'utilisation de 0,5 à 13 bars est de l'ordre de 200 millibars. Dans son utilisation préférentielle sur les imprimantes à jet d'encre dans lesquelles les pressions (pu) varient de 0,5 à 5 bars, la précision de régulation obtenue est de 18 millibars.

Enfin, une autre caractéristique importante de l'invention est que ce dispositif permet aussi de faire fonctionner la pompe fournissant la pression du fluide utilisé dans des conditions optimales, le régulateur étant chargé de faire varier la pression grâce à la fuite réglable (fr) tout en conservant une vitesse fixe de la pompe.

L'invention s'applique à tous les systèmes hydrauliques nécessitant une grande précision sur la régulation de la pression d'utilisation du fluide considéré.

Elle trouve notamment une application privilégiée dans toutes les imprimantes à jet d'encre.

## Revendications

1. Dispositif de régulation de pression d'un fluide comportant un poussoir (8) appuyant sur un ressort (9) et agissant sur un clapet (10) susceptible de réguler le passage de fluide, le fluide (ff) transitant par une canalisation (C) depuis une entrée (E), vers une sortie (S) réalisée dans un corps (1), canalisation (C) dans laquelle débouche, de part et d'autre de celle-ci et perpendiculairement à elle, un alésage (20) également réalisé dans ledit corps (1); caractérisé en ce que l'alésage (20) est relié d'un côté à la combinaison du poussoir (8), ressort (9) et clapet (10), le dernier obturant la communication entre l'orifice de l'alésage dans la canalisation et une voie de retour (Vr), et de l'autre, à un capteur de pression (12) intégré aussi dans le dit corps (1), le dit corps (1) étant rendu solidaire d'un second corps (4) dans lequel coulisse librement une noix (7) capable de coopérer avec le dit poussoir (8) commandant le clapet (10), tandis qu'une membrane souple (3) assure l'étanchéité entre les deux corps (1) et (4) qui constituent alors un ensemble monolithique; la régulation fine de la pression d'utilisation (pu) du fluide (ff) parcourant le canal (C) étant obtenue grâce à un automatisme externe qui agit sur un moteur pas à pas (6), suivant une consigne donnée, afin de contraindre plus ou moins le ressort (9) sous l'action d'une vis (5) agissant sur la noix (7), ce qui a pour effet de créer une fuite (fr) par le dit orifice (O) débouchant dans l'alésage (20), fuite se créant ou s'obturant via l'alésage (20) à la voie de retour (Vr), ce qui provoque une variation de la pression (pu).

2. Dispositif selon la revendication 1, caractérisé en ce qu'à tout instant, la pression d'utilisation (pu) est lue en permanence par la cellule capteur de pression (12) qui coopère avec le moteur pas à pas (6) pour arrêter son action dès que la pression (pu) souhaitée est atteinte.

3. Dispositif selon la revendication 3, caractérisé en ce que la commande de la vis (5) peut s'effectuer d'une manière manuelle par une molette (55) en cas de défaillance du moteur pas à pas (6) ou du système programmable d'asservissement.

4. Dispositif selon l'une des revendications précédentes, caractérisé en ce que la présence du ressort (9) agissant sur le clapet (10) évite le phénomène de pompage en absorbant les très faibles variations de pression.

5. Dispositif selon l'une des revendications précédentes, caractérisé en ce qu'une pompe fournissant la pression de fluide est utilisée dans des conditions optimales, le régulateur étant chargé de faire varier la pression grâce à une fuite réglable (fr) tout en conservant une vitesse fixe de la pompe.

## Claims

1. A method for the regulation of the pressure of a fluid comprising a thrust member (8) bearing on a spring (9) and acting on a valve (10) adapted to regulate the passage of the fluid (ff) passing via a duct (C), from an inlet (E), to an outlet (S) produced in a body (1), the said duct (C) having a bore (20) opening into it from both sides and perpendicularly to it, the said bore (20) also being produced in the body (1), characterized in that the bore (20) is connected at one end with the combination of the thrust member (8), the spring (9) and the valve (10), the latter shutting off communication between the port of the bore into the duct and a return path (Vr), and at the other end with a pressure sensor (12) also integrated in the said body (1), the said body (1) being rendered integral with a second body (4) in which there freely slides an intermediate member (7) adapted for cooperation with the said thrust member (8) driving the valve (10), while a flexible membrane (3) provides for a sealing effect between the two bodies (1) and (4) which then constitute a monolithic subassembly; fine regulation of the operational pressure (pu) of the fluid (ff) passing through the duct (C) then being produced by means of external automatic means which acts on a stepper motor (6), in accordance with a given control input in order to tension to a greater or lesser extent the spring (9) under the action of a screw (5) acting on the intermediate member (7), this having the effect of allowing leakage (fr) through the said port (O) opening into the bore (20), the said leakage coming into being or being shut off via the bore (20) to the return path (Vr), this causing a variation of the pressure (pu).

2. The device as claimed in claim 1, characterized in that at every instant the operational pressure (pu) is continuously sensed by the pressure sensor (12) which is in cooperation with the stepper motor (6) in order to discontinue its action as soon as the desired pressure (pu) is attained.

3. The device as claimed in claim 3, characterized in that the control for the screw (5) may be effected in a manual manner by means of a knurled wheel (55) in the case of failure of the stepper motor (6) or of the programmable servo system.

4. The device as claimed in any one of the preceding claims, characterized in that the presence of the spring (9) acting on the valve (10) prevents pumping by absorbing minute variations in pressure.

5. The device as claimed in any one of the preceding claims, characterized in that a pump supplying the fluid pressure is employed in optimum conditions, the regulator being caused to vary the pressure owing to a regulated leakage (fr) while maintaining a fixed speed of the pump.

## Patentansprüche

1. Vorrichtung zur Regelung des Drucks eines Fluids, mit einem auf einer Feder (9) sich abstützenden Stößel (8), der auf ein zur Regelung des Durchflusses des Fluids geeignetes Ventil (10) wirkt, wobei sich das Fluid (ff) durch ein Rohrsystem (C) von einem Eingang (E) an einen in einem Körper (1) ausgebildeten Ausgang (S) bewegt, wobei auf beiden Seiten des Rohrsystems (C) senkrecht zu diesem eine ebenfalls in dem Körper (1) ausgebildete Bohrung (20) mündet; dadurch gekennzeichnet, daß die Bohrung (20) einerseits mit der den Stößel (8), die Feder (9) und das Ventil (10) umfassenden Kombination verbunden ist, wobei das letztere die Verbindung zwischen der Mündung der Bohrung in das Rohrsystem und einem Rückleitungskanal (Vr) sperrt, und andererseits mit einem ebenfalls in den Körper (1) integrierten Druckfühler (12) verbunden ist, wobei der Körper (1) mit einem zweiten Körper (4) verbunden ist, in dem ein Anschlagteil (7) frei verschiebbar ist, das mit dem das Ventil (10) steuernden Stößel (8) zusammenwirken kann, während eine biegsame Membran (3) die Dichtigkeit zwischen den zwei Körpern (1) und (4), die somit eine monolithische Gesamtheit bilden, gewährleistet; wobei die Feineinstellung des Arbeitsdrucks (Pu) des das Rohr (C) durchströmenden Fluids (ff) kraft einer externen Automatik erzielt wird, die gemäß einem gegebenen Sollwert auf einen Schrittmotor (6) wirkt, um die Feder (9) unter der Wirkung einer auf das Anschlagteil (7) wirkenden Schraube (5) mehr oder weniger zusammenzudrücken, was die Wirkung hat, daß eine Leckströmung durch die in die Bohrung (20) mündende Öffnung (O) erzeugt wird, wobei die Leckströmung über die Bohrung (20) zum Rückleitungskanal (Vr) erzeugt oder gesperrt wird, was eine Änderung des Drucks (Pu) zur Folge hat.

2. Vorrichtung gemäß Anspruch 1, dadurch gekennzeichnet, daß der Arbeitsdruck (pu) in jedem Moment von der Druckfühler-Zelle (12) ununterbrochen gelesen wird, wobei die DruckfühlerZelle (12) mit dem Schrittmotor (6) zusammenarbeitet, um dessen Betrieb anzuhalten, sobald der gewünschte Druck (pu) erreicht wird.

3. Vorrichtung gemäß Anspruch 2, dadurch gekennzeichnet, daß die Steuerung der Schraube (5) im Falle einer Störung des Schrittmotors (6) oder des programmierbaren Regelsystems auf manuelle Weise mittels eines Rändelrades (55) ausgeführt werden kann.

4. Vorrichtung gemäß einem der vorangehenden Ansprüche, dadurch gekennzeichnet, daß das Vorhandensein der auf das Ventil (10) wirkenden Feder (9) das Phänomen des Pendelns um den Nennwert vermeidet, indem die sehr schwachen Druckänderungen absorbiert werden.

5. Vorrichtung gemäß einem der vorangehenden Ansprüche, dadurch gekennzeichnet, daß in den optimalen Zuständen eine den Fluiddruck liefernde Pumpe verwendet wird, wobei der Regler belastet wird, um unter Aufrechterhaltung einer konstanten Geschwindigkeit der Pumpe kraft einer einstellbaren Leckströmung (fr) den Druck zu verändern.

FIG.1